(19) **Europäisches Patentamt / European Patent Office / Office européen des brevets**

(11) **EP 3 904 077 A1**

(12) # EUROPEAN PATENT APPLICATION

(43) Date of publication:
**03.11.2021 Bulletin 2021/44**

(21) Application number: **21160062.2**

(22) Date of filing: **01.03.2021**

(51) Int Cl.:
*B32B 18/00* (2006.01)    *F28D 1/02* (2006.01)
*F28D 1/03* (2006.01)    *F28F 21/04* (2006.01)
*B32B 3/02* (2006.01)    *B32B 3/28* (2006.01)
*B32B 5/02* (2006.01)    *B32B 5/12* (2006.01)
*B32B 5/14* (2006.01)    *B32B 7/05* (2019.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.05.2020 US 202063019316 P**

(71) Applicant: **Hamilton Sundstrand Corporation Charlotte, NC 28217-4578 (US)**

(72) Inventors:
• HOLOWCZAK, John E.
  S. Windsor, Connecticut 06074 (US)

• SHEEDY, Paul
  Bolton, Connecticut 06043 (US)
• ALMS, Justin B.
  Coventry, Connecticut 06238 (US)
• GANGLOFF, John J.
  Middletown, Connecticut 06457 (US)
• MOSHER, Daniel A.
  Glastonbury, Connecticut 06033 (US)
• RANJAN, Rajiv
  South Windsor, Connecticut 06074 (US)
• ST. ROCK, Brian
  Andover, Connecticut 06232 (US)

(74) Representative: **Dehns**
**St. Bride's House**
**10 Salisbury Square**
**London EC4Y 8JD (GB)**

(54) **CERAMIC MATRIX COMPOSITE LAMINATE TUBE SHEET AND METHOD FOR MAKING THE SAME**

(57) A laminate composite structure having at least one tubular region (104) and at least one bonded region(105). The structure has a first composite layer, a second composite layer, a cavity, and one or more reinforcing fibers. Each composite layer comprises composite material with a top face and a bottom face opposite the top face. The top face of one is joined to the bottom face of the other along an interlaminar region. The cavity separates the bottom face and the top face to form a tube. The tube has an internal boundary defined by the bottom face and the top face. The reinforcing fibers line the internal boundary and are arranged so that the reinforcing fibers reduce the propensity of the composites layer to separate under internal pressure loading.

Fig. 1A

**(Cont. next page)**

EP 3 904 077 A1

Fig. 1B

**Description**

STATEMENT OF GOVERNMENT INTEREST

This invention was made with government support under DE-EE0008318 awarded by the Department of Energy. The government has certain rights in the invention.

BACKGROUND

Heat exchangers can be made of many different types of materials. For high temperature and long duration usage, Ceramic Matrix Composite (CMC) heat exchangers, including glass ceramic matrix composites (GCMC), are particularly useful. CMCs can be processed by a laminate approach, whereby layers of fiber preforms are stacked together to form a laminate and a matrix material is consolidated and incorporated into and around the fiber preform. Tubed heat exchangers have been made using a laminate approach. However, in such laminate approaches, the pressure differential that the tube can withstand is closely tied to the interlaminar strength of the CMC. Because such strengths are normally quite low, the pressure differential at which the heat exchanger can be used is limited.

SUMMARY

Described herein is a laminate composite structure having at least one tubular region and at least one bonded region. The structure has a first composite layer, a second composite layer, a cavity, and one or more reinforcing fibers. The first composite layer includes composite material with a first top face and a first bottom face opposite the first top face. The second composite layer includes composite material with a second top face and a second bottom face opposite the second top face. The second top face is joined to the first bottom face along an interlaminar region in each bonded region. The cavity separates the first bottom face and the second top face to form a tube in each of the tubular regions. The tube has an internal boundary defined by the first bottom face and the second top face. The reinforcing fibers line the internal boundary and are arranged so that the reinforcing fibers reduce the propensity of the first composite layer to separate from the second composite layer under internal pressure loading.

Further described is a method for making a laminate composite structure. The method includes providing a first composite layer and a second composite layer described above. One or more reinforcing fibers are placed around a mandrel to form a wrapped mandrel. A matrix forming material is applied to the reinforcing fibers. The wrapped mandrel is then sandwiched between the first bottom face and the second top face to form a composite stack. The composite stack is then consolidated to form a laminate structure.

BRIEF DESCRIPTION OF THE DRAWINGS

FIG. 1A is a perspective view of a representative heat exchanger tube sheet.
FIG. 1B is a sectional perspective view of the heat exchanger of FIG. 1A taken along box A.
FIG. 2A is a flow diagram illustrating a representative method of making a representative heat exchanger described herein.
FIG. 2B is a sectional perspective view of the heat exchanger of FIG. 2A taken along box B.
FIG. 3 is a sectional perspective view of a representative filament wound mandrel.

DETAILED DESCRIPTION

Tube heat exchangers have tubes with extended outer surface area. The fluid surrounding the tubes maybe process fluid, for example, water, supercritical carbon dioxide, or air. Tube heat exchangers can be made of any number of materials, but for high temperature and long duration usage, Ceramic Matrix Composite (CMC), including GCMC, heat exchangers are particularly useful.

CMC heat exchangers can be processed by a laminated compression molding or transfer molding approach. In a laminated compression molding approach, layers of CMC fiber preforms are layered, intermingled, or laminated with the matrix material between them. Then the matrix material is consolidated and incorporated into and around the fiber preform. Laminated compression molding can occur under high temperature, high pressure, high vacuum, or some combination thereof. In some embodiments, GCMC are processed by hot pressing or glass transfer molding. For example, the fiber preform is loaded with glass powder, which consolidates in between and around the fibers during a hot press operation. In other embodiments, GCMCs may be formed by molten glass infiltration of a fiber preform in a glass transfer molding process. Heat exchangers comprising a tube sheet have been made using a laminated approach. For example, previously, graphite rods or tubes would be placed between layers of CMC fiber/matrix materials and pressed during a thermoforming operation, or an infusion operation. Thermoforming can include hot pressing, for example. An infusion operation can include, for example, glass transfer molding between two die sets. The resulting laminate would then be debulked and the graphite tube is left in place. Optionally, a ceraming step can be performed in an inert gas atmosphere to transform the glass matrix into a ceramic matrix for improved material properties. After ceraming, the graphite tube can be removed by a chemical process such as oxidation, physically removed, electrically removed or left in place. However, for CMC heat exchangers processed by such laminate approaches, any differential pressure encountered during operation would place stress directly on the interlaminar regions. As such, the pressure differential that the tube sheet can withstand is limited by the interlaminar strength of the CMC. Due to a lack of reinforcement (e.g. fibers), in the interlaminar region of the CMC (i.e. it is matrix-rich) the interlaminar strength is typically dictated by the strength of the ceramic matrix, which in CMC or GCMC is a relatively weak glass or glass-ceramic phase. Generally, the interlaminar strengths of CMC, the point where the layers pull apart, are generally in the range of 400 psi to 8,000 psi, or 1,000 psi to 4,000 psi. The relationship between the material stress and the internal pressure can be roughly represented by the common formula for the hoop stress of a thin walled cylinder. If $\sigma$ is the stress of the CMC, r is the radius of the thin walled tube, $t$ is the tube wall thickness and $P$ is the pressure differential, then $\sigma = \frac{r}{t} P$. A typical value of $\frac{r}{t}$ is approximately 5, resulting in a peak differential pressure of 200 to 800 psi. When in use, the pressure differential through the tube can be significantly higher than 200 psi. Therefore, the usefulness of a CMC tube heat exchanger made by a laminate approach can be limited. When you compare the hoop stress to the interlaminar strength, if the hoop stress is greater than the interlaminar strength there will be a propensity of the layers to separate and the tube-sheet to fail.

By reinforcing the tube with appropriately oriented fibers, as described herein, the stress from the pressure differential while in use is transferred to the reinforcing fibers which have a higher strength than the matrix-rich interlaminar region. Because the matrix-rich interlaminar region is no longer the only internal structure supporting the pressure differential, the strength of the reinforcing fibers becomes the primary limiting factor. The reinforcing fibers are oriented to have a much higher stress tolerance than the interlaminar region. Therefore, the transfer of the stress due to the high-pressure differential from the interlaminar region to the reinforcing fibers effectively increases the pressure differential that the CMC tube heat exchanger, can effectively operate.

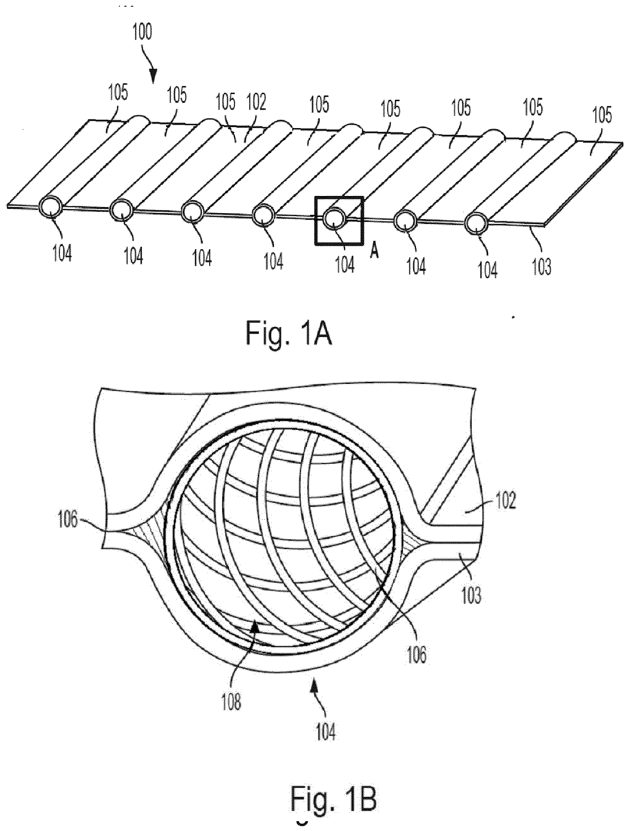

FIG. 1A is a perspective view of a representative heat exchanger. FIG. 1A shows tube sheet 100, upper CMC layer 102, lower CMC layer 103, tube 104, and bonded region 105. In some embodiments CMC layers 102 and 103 can comprise one or more plies with unidirectional reinforcing fibers oriented in alternating directions. In other embodiments, CMC layers 102 and 103 can include, for example, a woven fabric or a non-woven fiber mat. Tube sheet 100 is made of upper CMC layer 102 and lower CMC layer 103 laminated together. The upper and lower CMC layers 102 and 103 can be made of, for example a fiber preform infiltrated with a glass matrix, a pre-ceramic polymer derived matrix, chemical vapor infiltrated matrix, sintered porous oxide matrix, or a combination thereof. In some embodiments, a matrix forming material can be used, for example, powdered glass or a glass slurry. Each CMC layer 102 can have a thickness, for example, at least 0.004 inches, at least 0.006 inches, or at least 0.010 inches. Between CMC layers 102 and 103 are tubes 104. Tubes 104 include cavities or open spaces between CMC layers 102 and 103 with bonded regions 105 between them. Tubes 104 are depicted as cylindrical, but tubes 104 can be any shape suitable for the intended purpose, for example, prismatic, trapezoidal, cylindrical, wavy, stepped, or some combination thereof. Tubes 104 can have a diameter of, for example, greater than 0.050 inches, greater than 0.1 inches, or greater than 0.2 inches. Each of tubes 104 can have the same or different diameter. Tubes 104 can be randomly distributed, spaced at regular intervals, or some combination thereof throughout tube sheet 100. The regular intervals can be, for example, between 1 diameter and 10 diameters, between 1.25 diameters and 5 diameters, or between 1.5 diameters and 3 diameters.

Fig. 1B is a sectional perspective view of the heat exchanger of FIG. 1A taken along box A. Fig. 1B shows upper CMC layer 102, lower CMC layer 103, tube 104, and interlaminar region 106 as described above, as well as reinforcing fibers 106 and cavity 108. Tube 104 includes cavity 108 between CMC layers 102 and 103. Cavity 108 is an open space between CMC layers 102 and 103 where CMC layers 102 and 103 are not in contact with each other. Cavity 108 allows for fluid flow through tube sheet 100 between the layers. The fluid, which passes along the internal surface of the tubes, can be, for example, gas, liquid, or supercritical fluid. Similarly, the fluid which passes along the external surface of the tubes or tube sheet in the heat exchanger can be, for example, gas, liquid, or supercritical fluid. Reinforcing fibers 106 line the inside of tube 104 and conform to the shape of cavity 108. When in use, fluid flows through tube 104 and has a pressure. There is also a pressure outside of tube 104. The difference between the fluid pressure and the outside pressure is the pressure differential. If the fluid pressure is higher than the outside pressure, the force created by the pressure places tensile stress on tube 104 primarily in the circumferential direction. Without reinforcing fibers 106, this stress is placed on interlaminar region 106. Interlaminar region 106 is the area where the bond is created between upper CMC layer 102 and lower CMC layer 103. If the tensile stress is greater than the strength of interlaminar region 106 then the laminate will separate. With reinforcing fibers 106, the stress is instead placed on the reinforcing fibers. As a result, the strength of tube 104 is increased substantially, being limited by the strength of reinforcing fibers 106 rather than the interlaminar strength. For typical material and geometries given above, this can be an over 10 times improvement, increasing pressure different capability from nominally 300 psi to over 3,000 psi. Because the strength of reinforcing fibers 106 is higher than the interlaminar strength, the useful pressure of tube sheet 100 is higher. The useful pressure of tube sheet 100 and the resulting heat exchanger can be, for example, at least 3,000 psi, at least 4,000 psi, or at least 5,000 psi.

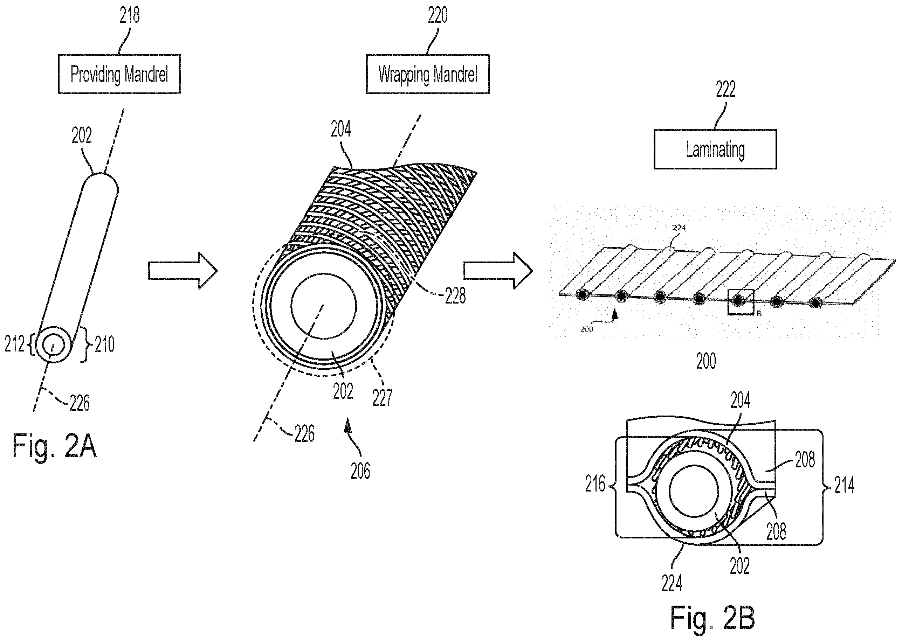

Fig. 2A shows a representative method of making heat exchanger 200, described herein. FIG. 2B is a sectional perspective view of the tube sheet of FIG. 2A taken along box B. FIGS. 2A and 2B show tube sheet heat exchanger 200, mandrel 202, reinforcing fibers 204, wrapped mandrel 206, CMC layers 208, mandrel outer diameter 210, mandrel inner diameter 212, outer tube diameter 214, inner tube diameter 216, axis 226, circumferential direction 227, and bias angle 228. The method includes the primary steps of providing a mandrel 218, wrapping mandrel 220, and laminating 222. The first step is providing a mandrel 218. Mandrel 202 is a structure made in the shape and size required to produce the desired shape and size of tube 224. Mandrel 202 can be, for example, a cylinder, a rod, a prism, a tube, waved, stepped, or some combination thereof. Mandrel 202 can be made of any suitable material, for example, graphite, ceramic material, composite with graphite, or some combination thereof. Mandrel 202 in Fig. 2A is a cylindrical tube with mandrel outer diameter 210 and mandrel inner diameter 212. In cases where mandrel 202 will be removed, mandrel outer diameter 210 is selected, for example, to be the desired diameter for fluid to flow through. In cases where mandrel 202 will remain in place, mandrel outer diameter 210 is selected for its desired properties, for example the ratio to mandrel inner diameter 212 to facilitate heat transfer. Mandrel outer diameter 210 can be, for example, between 0.050 inches and 0.200 inches, between 0.075 inches and 0.150 inches, or between 0.080 inches and 0.115 inches. Mandrel inner diameter 212 is the diameter of the internal surface of mandrel 202. In cases where mandrel 202 will be removed, mandrel inner diameter 212 is selected for ease of removal. In cases where mandrel 202 will remain in place, mandrel inner diameter 212 is selected, for example, to be the desired diameter for fluid to flow through or in combination with mandrel outer diameter 210 to facilitate heat transfer. Mandrel inner diameter 212 can be, for example, between 0.025 inches and 0.175 inches, between 0.050 inches and 0.125 inches, or between 0.075 inches and 0.100 inches.

The next step is wrapping mandrel 220. Mandrel 202 is wrapped with reinforcing fibers 204. Wrapping can include a spiral with different helical angles, clockwise and, counterclockwise, as well as braiding, weaving, or some combination thereof, for example. These reinforcements can be uniform along the length or can have regions with higher fiber content. In some embodiments, reinforcing fibers 204 are wrapped in one axial direction until the end of mandrel 202 is reached and then wrapped in the opposite axial direction until the starting end is reached to produce a dual spiral wrap to ensure full coverage and produce a balanced +/- angle relative to circumferential direction 227. The resulting reinforcing fibers 204 then comprise a dual layer with one layer wrapping in one direction and the other layer wrapping in the opposite direction. Reinforcing fibers 204 can include axial fibers aligned with axis 226 which runs longitudinally relative to mandrel 202. Reinforcing fibers 204 can be wrapped at bias angle 228, which is the angle relative to circumferential direction 227 whether or not axial fibers are present. Reinforcing fibers 204 can have bias angle 228, for example, between +5° and -5°, between +25° and -25°, or between +45° and -45°.

Reinforcing fibers 204 can be one or more individual fiber tows, for example, up to 3 fiber tows, up to 5 fiber tows, or up to 7 fiber tows. Reinforcing fibers 204 can be made of silicon carbide, silicon nitride, carbon, oxides, aluminosilicates, or some combination thereof, for example. Each fiber tow can be made up of multiple filaments. Each filament can be made of the same or different materials. Each filament can be for example, between 8 microns and 20 microns, between 9 microns and 17 microns, or between 10 microns and 15 microns. Each fiber tow can include, for example, between 400 and 12,000 filaments, between 500 and 5,000 filaments, or between 600 and 3,000 filaments, optionally twisted together.

To facilitate adhering reinforcing fiber 204 to CMC layers 208 a matrix forming material can be provided on reinforcing fiber 204. A matrix forming material is a material or agent that forms a matrix when the tube sheet is consolidated. The matrix forming material can be, for example, a glass or glass slurry. In some embodiments reinforcing fiber 204 can be coated in the glass or glass slurry prior to winding, for example. In other embodiments reinforcing fiber 204 can be dipped into, painted with, or spray coated with the matrix forming material after winding, for example. Some combination of coating before and/or after winding can also be used. The glass or glass slurry can comprise, for example borosilicate glass, lithium alumino silicate glass, barium magnesium alumino silicate glass, strontium alumino silicate glass, rare earth silicate glass, phosphate glass, glass or ceramic powder, organic binders and dispersants, inorganic binders, colloidal silica-based inorganic binders, defoamers, deionized water mixture, organic solvents, or some combination thereof.

Laminating process step 222 creates tube sheet 200. One or more wrapped mandrels 206 are placed between CMC layers 208 in the desired final locations. CMC layers 208 are consolidated around wrapped mandrels 206. The resulting tube sheet 200 has a series of tubes 224, as described above. Outer tube diameter 214 is determined by a combination of the thickness of CMC layers 208, thickness of reinforcing fibers 204, and mandrel outer diameter 210. Inner tube diameter 216 is determined by mandrel outer diameter 210.

Mandrel 202 can be left in place or it can be removed. Removal can occur, for example, through physical removal, sonification, chemical means, electrical means, or by oxidation as described in US Pat. No. 6,627,019 to Jarmon et al., which is hereby incorporated in its entirety to the extent that it is not inconsistent with this specification. Tube sheet 200 can be used alone as a heat exchanger or multiple tube sheets 200 can be combined to form a heat exchanger.

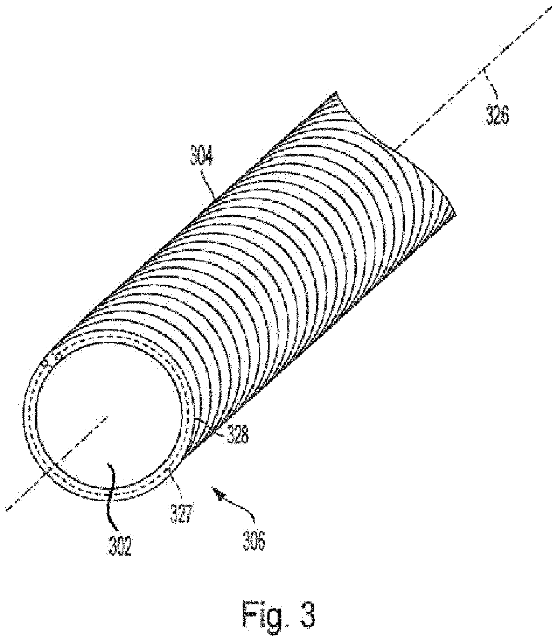

FIG. 3 is a sectional perspective view of an alternate representative filament wound mandrel. FIG 3 shows mandrel 302 wrapped with reinforcing fiber 304, to form filament wound mandrel 306, with longitudinal axis 326, circumferential direction 327, and bias angle 328. When filament wound mandrel 306 is wrapped, a filament winding method is used. Mandrel 302 is wrapped with reinforcing fibers 304. Specifically, reinforcing fibers 304 are closely wrapped in one axial direction until the end of mandrel 302 is reached and then wrapped in the opposite axial direction until the starting end is reached to produce a dual spiral wrap to ensure full coverage and produce a balanced and very small (near 0°) +/- angle relative to circumferential direction 327. The resulting reinforcing fibers 304 then comprise a dual layer with one layer wrapping in one direction and the other layer wrapping in the opposite direction.

**Discussion of Possible Embodiments**

The following are non-exclusive descriptions of possible embodiments of the present invention.

A laminate composite structure comprising: at least one tubular region; at least one bonded region; a first layer comprising a material and having a first top face and a first bottom face opposite the first top face; a second layer comprising a material and having a second top face and a second bottom face opposite the second top face, the second top face being joined to the first bottom face along an interlaminar region in each of the at least one bonded region; a cavity separating the first bottom face and the second top face to form a tube in each of the at least one tubular region, the tube having an internal boundary defined by the first bottom face and the second top face; and one or more reinforcing fibers lining the internal boundary; wherein the one or more reinforcing fibers are arranged so that the reinforcing fibers reduce the propensity of the first composite layer to separate from the second composite layer under internal pressure loading.

The structure of the preceding paragraph can optionally include, additionally and/or alternatively, any one or more of the following features, configurations, and/or additional components.

A further embodiment of the foregoing structure wherein the reinforcing fibers are wound, woven, braided, or some combination thereof.

A further embodiment of any of the foregoing structures wherein the reinforcing fibers comprise silicon-based fibers such as silicon carbide, carbon fibers, oxide fibers, alumino silicate fibers, glass fibers, or a combination thereof.

A further embodiment of any of the foregoing structures wherein the cavity is prismatic or cylindrical in shape.

A further embodiment of any of the foregoing structures further comprising a rod or tube inside the cavity.

A further embodiment of any of the foregoing structures wherein the rod or tube comprises graphite, ceramic material, composite with graphite, or a combination thereof.

A further embodiment of any of the foregoing structures further comprising a glass or glass-ceramic matrix material binding the reinforcing fibers in the first layer and the second layer.

A further embodiment of any of the foregoing structures wherein the cavity has a longitudinal axis and at least one of the one or more reinforcing fibers have a bias angle relative to the circumferential axis between 0° and +/-45°.

A further embodiment of any of the foregoing structures wherein the cavity has a longitudinal axis and at least one of the one or more reinforcing fibers have an angle relative to the longitudinal axis between 0° and 5°.

A method for making a laminate composite structure, the method comprising: providing a first layer comprising a first top face and a first bottom face opposite the first top face, and a second layer comprising a second top face and a second bottom face opposite the second top face; placing one or more reinforcing fibers around a mandrel to form a wrapped mandrel; applying a matrix forming material to the one or more reinforcing fibers; sandwiching the wrapped mandrel between the first bottom face and the second top face to form a composite stack; and consolidating the composite stack to form a laminate structure.

The method of the preceding paragraph can optionally include, additionally and/or alternatively, any one or more of the following features, configurations, and/or additional components.

A further embodiment of the foregoing method further comprising chemically, electrically, or mechanically removing the mandrel from the laminate structure.

A further embodiment of any of the foregoing methods wherein the matrix forming material is applied to the one or more reinforcing fibers before the one or more reinforcing fibers are placed around the mandrel.

A further embodiment of any of the foregoing methods wherein the matrix forming material is applied by dredging the one or more reinforcing fibers through the matrix forming agent.

A further embodiment of any of the foregoing methods wherein the matrix forming material is applied to the one or more reinforcing fibers after the one or more reinforcing fibers are placed around the mandrel.

A further embodiment of any of the foregoing methods wherein the matrix forming material is applied by spray coating, dip coating, or some combination thereof.

A further embodiment of any of the foregoing methods wherein placing the one or more reinforcing fibers around the mandrel comprises winding, weaving, braiding, or a combination thereof.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

**Claims**

1. A laminate composite structure comprising:

   having at least one tubular region (104);
   at least one bonded region (105);
   a first layer comprising a material and having a first top face and a first bottom face opposite the first top face;
   a second layer comprising a material and having a second top face and a second bottom face opposite the second top face, the second top face being joined to the first bottom face along an interlaminar region (106) in each of the at least one bonded region;
   a cavity (108) separating the first bottom face and the second top face to form a tube in each of the at least one tubular region, the tube having an internal boundary defined by the first bottom face and the second top face; and one or more reinforcing fibers lining the internal boundary;
   the interlaminar region (106) having an interlaminar tensile strength;
   wherein the tubular layer is subjected to a hoop stress when under internal pressure loading and the one or more reinforcing fibers are arranged so that the hoop stress can exceed the interlaminar tensile strength without first composite layer to separating from the second composite layer.

2. The laminate composite structure of claim 1 wherein the reinforcing fibers are wound, woven, braided, or some combination thereof.

3. The laminate composite structure of claim 1 or 2 wherein the reinforcing fibers comprise silicon carbide, carbon, oxide fiber, alumina silicate, or a combination thereof.

4. The laminate composite structure of any preceding claim wherein the cavity is prismatic or cylindrical in shape.

5. The laminate composite structure of any preceding claim further comprising a rod or tube inside the cavity.

6. The laminate composite structure of claim 5 wherein the rod or tube comprises graphite, ceramic material, composite with graphite, or a combination thereof.

7. The laminate composite structure of any preceding claim further comprising a glass or glass-ceramic matrix material binding the reinforcing fibers in the first layer and the second layer.

8. The laminate composite structure of any preceding claim wherein the cavity has a longitudinal axis and at least one of the one or more reinforcing fibers have a basis angle relative to the circumferential axis between 0° and +/-45°.

9. The laminate composite structure of any preceding claim wherein the cavity has a longitudinal axis and at least one of the one or more reinforcing fibers have an angle relative to the longitudinal axis between 0° and 5°.

10. A method for making a laminate composite structure, the method comprising:

    providing a first layer comprising a first top face and a first bottom face opposite the first top face, and a second layer comprising a second top face and a second bottom face opposite the second top face;
    placing one or more reinforcing fibers around a mandrel to form a wrapped mandrel;
    applying a matrix forming material to the one or more reinforcing fibers;
    sandwiching the wrapped mandrel between the first bottom face and the second top face to form a composite stack; and
    consolidating the composite stack to form a laminate structure.

11. The method of claim 10 further comprising chemically, electrically, or mechanically removing the mandrel from the laminate structure.

12. The method of claim 10 or 11 wherein the matrix forming material is applied to the one or more reinforcing fibers before the one or more reinforcing fibers are placed around the mandrel.

13. The method of claim 12 wherein the matrix forming material is applied by dredging the one or more reinforcing fibers through the matrix forming agent.

14. The method of any of claims 10 to 13 wherein the matrix forming material is applied to the one or more reinforcing fibers after the one or more reinforcing fibers are placed around the mandrel, and optionally wherein the matrix forming material is applied by spray coating, dip coating, or some combination thereof.

15. The method of any of claims 10 to 14 wherein placing the one or more reinforcing fibers around the mandrel comprises winding, weaving, braiding, or a combination thereof.

Fig. 1A

Fig. 1B

EP 3 904 077 A1

218

Providing Mandrel

220

Wrapping Mandrel

222

Laminating

202

212 { 210

226

Fig. 2A

204

228

202

227

226

206

224

200

200

B

204

216

208

214

208

224

202

Fig. 2B

Fig. 3

Europäisches
Patentamt

European
Patent Office

Office européen
des brevets

# EUROPEAN SEARCH REPORT

**Application Number**

EP 21 16 0062

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/004425 A1 (LEHMAN LEANNE L [US] ET AL) 1 January 2009 (2009-01-01)<br>* figures 3-7; paragraphs 1, 4, 19-21, 24, 25, 29-31 *<br>----- | 1-15 | INV.<br>B32B18/00<br>F28D1/02<br>F28D1/03<br>F28F21/04 |
| A | US 2003/059577 A1 (MORRISON JAY [US] ET AL) 27 March 2003 (2003-03-27)<br>* figures; paragraphs 1, 29, 30-33, 35, 37 *<br>----- | 4,5,7-9, 12-15 | B32B3/02<br>B32B3/28<br>B32B5/02<br>B32B5/12<br>B32B5/14 |
| X,P | EP 3 693 549 A1 (UNITED TECHNOLOGIES CORP [US]) 12 August 2020 (2020-08-12)<br>* pararaphs 29-31, 34-36 *<br>----- | 1-6,10, 11,14,15 | B32B7/05 |

**TECHNICAL FIELDS SEARCHED (IPC)**

B32B
C04B
F28F
F28D

The present search report has been drawn up for all claims

| Place of search | Date of completion of the search | Examiner |
|---|---|---|
| The Hague | 13 August 2021 | Barenbrug, Theo |

EPO FORM 1503 03.82 (P04C01)

## ANNEX TO THE EUROPEAN SEARCH REPORT
## ON EUROPEAN PATENT APPLICATION NO.

EP 21 16 0062

This annex lists the patent family members relating to the patent documents cited in the above-mentioned European search report.
The members are as contained in the European Patent Office EDP file on
The European Patent Office is in no way liable for these particulars which are merely given for the purpose of information.

13-08-2021

| Patent document cited in search report | | Publication date | Patent family member(s) | | Publication date |
|---|---|---|---|---|---|
| US 2009004425 | A1 | 01-01-2009 | AU | 2008202327 A1 | 15-01-2009 |
| | | | CA | 2633393 A1 | 28-12-2008 |
| | | | CN | 101332689 A | 31-12-2008 |
| | | | EP | 2008807 A2 | 31-12-2008 |
| | | | ES | 2699409 T3 | 11-02-2019 |
| | | | JP | 2009113470 A | 28-05-2009 |
| | | | US | 2009004425 A1 | 01-01-2009 |
| US 2003059577 | A1 | 27-03-2003 | DE | 60224412 T2 | 02-01-2009 |
| | | | EP | 1429917 A2 | 23-06-2004 |
| | | | JP | 4072123 B2 | 09-04-2008 |
| | | | JP | 2005503941 A | 10-02-2005 |
| | | | KR | 20040037105 A | 04-05-2004 |
| | | | US | 2003059577 A1 | 27-03-2003 |
| | | | WO | 03026887 A2 | 03-04-2003 |
| EP 3693549 | A1 | 12-08-2020 | EP | 3693549 A1 | 12-08-2020 |
| | | | US | 2021079804 A1 | 18-03-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 6627019 B, Jarmon